# EUROPÄISCHE PATENTSCHRIFT

(11) **EP 0 584 401 B1**
(45) Veröffentlichungstag und Bekanntmachung des Hinweises auf die Patenterteilung: **08.07.1998**
(21) Anmeldenummer: 92120272.7
(22) Anmeldetag: 27.11.1992
(51) Int. Cl.: C03B 5/235, F27B 3/20

(54) **Regenerative Schmelzwanne mit reduziertem No x-Ausstoss**
Low NOx regenerative melting tank
Cuve de fusion à régénération avec une émission réduite de NOx

(30) Priorität: 11.07.1992 DE 4222863
(43) Veröffentlichungstag der Anmeldung: 02.03.1994
(73) Patentinhaber: Beteiligungen Sorg GmbH & Co. KG, D-97816 Lohr (DE)
(72) Erfinder: Pieper, Helmut, Dipl.-Ing, W-8770 Lohr/Main (DE)
(74) Vertreter: Schulze Horn, Stefan, Dipl.-Ing. M.Sc.

(56) Entgegenhaltungen:
- EP-A- 0 335 728
- FR-A- 1 563 414
- FR-A- 2 215 399
- SU-A- 421 635
- US-A- 1 828 833
- US-A- 2 016 945
- US-A- 2 088 783
- US-A- 2 228 347
- US-A- 3 193 268
- CLASTECHNISCHE BERICHTEN, Nr.333, 1. September 1967, DEUTSCHLAND S.FRAUENSCHILL 'Betriebserfahrungen bei Beheizung von Fensterglaswannen mit Erdgas'

## Beschreibung

Die Erfindung betrifft eine regenerative Schmelzwanne mit einem Brennerhals.

Bei Regenerativwannen, die schon sehr lange bekannt sind, erfolgt die Mischung zwischen Brennstoff und der sehr hoch vorgewärmten Luft durch relativ hohe Differenzgeschwindigkeiten der beiden Medien mit starkem Mischimpuls.

Nachteilig ist bei diesen Wannen allerdings, daß es durch die innige Vermischung von Brennstoffen und heißer, vorgewärmter Luft zu sehr hohen Flammenkerntemperaturen kommt, die bei diesen Regenerativwannen in den Abgasen zu hohen NOₓ-Gehalten führen. Regenerativwannen werden daher immer häufiger nicht mehr genehmigt.

Aus Glastechnische Berichten, 40. Jahrgang, Heft 9, September 1967, Seiten 333 - 344, S. Frauenschill: "Betriebserfahrungen bei Beheizung von Fensterglaswannen mit Erdgas" ist eine Glasschmelzwanne bekannt, bei der das Erdgas in viele Teilströme aufgeteilt und durch das Brennergewölbe zugeführt wurde, um eine intensivere Mischung mit der Verbrennungsluft sowie die gewünschte Flammenlänge zu erreichen. Eine andere aus diesem Artikel bekannte Glasschmelzwanne zeicht die Zufuhr von einem Teilstrom des Erdgases durch jede Seitenwand des Brennerhalses.

Aufgabe der Erfindung ist es, Regenerativwannen mit geringem NOₓ-Ausstoß zu schaffen, bei denen die Spitzentemperaturen beim Verbrennen in der Flamme verringert werden und ein gleichmäßiges Flammenfeld erzeugt wird, das in seiner Gesamteinstrahlung auf das Glasbad genau so wirksam ist wie die Hochimpulsflamme.

Dabei muß gewährleistet sein, daß die Energieverlagerung in Richtung der Flammenachse gegeben bleibt, d.h., daß bei höher belasteten Wannen mehr Energie im Einschmelzbereich und weniger im Läuterbereich zur Verfügung steht.

Diese Aufgabe wird erfindungsgemäß bei der gattungsgemäßen Wanne gelöst durch die Anordnung von jeweils mindestens zwei dem Brenner Brennstoffe zuführenden Brennstoffzuführungsdüsen in den Seitenwänden, im Boden und in der Decke des Brennerhalses.

Verfahren zum Betreiben der erfindungsgemäße Schmelzwanne werden in den unabhängigen Ansprüchen 8 und 9 angegeben.

Weitere vorteilhafte Ausgestaltungen des Erfindungsgegenstandes werden in den abhängigen Ansprüchen beschrieben.

Im folgenden wird eine Brennerausbildung für eine Regenerativwanne gemäß der Erfindung anhand einer Zeichnung näher beschrieben, die einen Schnitt durch einen Brennerhals zeigt.

Die Aufteilung der Brennstoffströme in viele kleine Einzelströme, die an der Peripherie des Luftstromes auf diesen stoßen, führt zu einem breiten Flammenband, bei welchem die Maximaltemperaturen im Flammenkern nicht die gleiche Höhe erreichen können, wie bei den herkömmlichen Regenrativwannen mit hohem Mischimpuls.

Die Regelung der Flammenlänge kann dadurch erfolgen, daß einige Brennstoffzuführungsdüsen vollständig abgeschaltet werden, so daß die Brennstoffzufuhr in den verbleibenden Düsen erhöht wird, womit der Mischeffekt größer und die Flammenlänge verkürzt wird. Das ist zwangsläufig allerdings wieder mit einer leichten Erhöhung des Stickoxidanteils verbunden.

Eine zweite Möglichkeit besteht darin, das Verhältnis der den Düsen zugeführten Brennstoffmengen gegeneinander zu verschieben. Werden z.B. die Düsen, die von unten in den Brennerhals eingeführt sind, stärker beaufschlagt, so bildet sich ein Flammenband im Gemengebereich aus, das in erster Linie die Energie im Gemengebereich abgibt.

Werden die von oben eingeführten Düsen stärker beaufschlagt, so wird die Flamme länger.

Weiterhin kann auch durch die Beaufschlagung der jeweils rechten oder linken Düsen in Flußrichtung das Flammenband näher auf die Außenseite oder mehr zum Zentrum der Wanne hin gelenkt werden.

Ersichtlicherweise kann die neue Brenneranordnung auch in Kombination mit einer bestehenden Unterbankfeuerung eingesetzt werden, so daß auch bestehende Wannen leicht nachrüstbar sind und jeder Belastungsfall optimal abgefahren werden kann.

Es kann also von einer perfekten Lösung der anstehenden Probleme gesprochen werden.

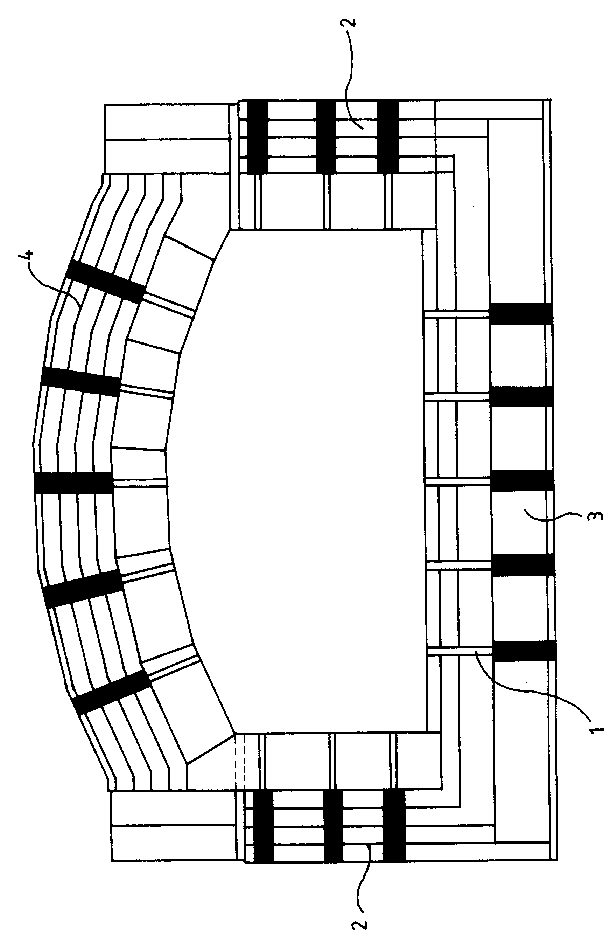

In der Figur ist ein Brennerhals gezeicht mit Seitenwänden 2, einem Boden 3, einer Decke 4 und Brennstoffzuführungsdüsen 1.

## Patentansprüche

1. Regenerative Schmelzwanne mit einem Brennerhals, mit einer Anordnung von jeweils mindestens zwei dem Brenner Brennstoffe zuführenden Brennstoffzuführungsdüsen (1) in den Seitenwänden (2), im Boden (3) und in der Decke (4) des Brennerhalses.

2. Regenerative Schmelzwanne nach Anspruch 1, dadurch gekennzeichnet, daß die Anzahl der Brennstoffzuführungsdüsen (1) in den Seitenwänden (2) bis vier beträgt.

3. Regenerative Schmelzwanne nach Anspruch 1, dadurch gekennzeichnet, daß die Anzahl der Brennstoffzuführungsdüsen (1) im Boden (3) drei bis sieben beträgt.

4. Regenerative Schmelzwanne nach Anspruch 1, dadurch gekennzeichnet, daß die Anzahl der Brennstoffzuführungsdüsen (1) in der Decke (4) drei bis sieben beträgt.

5. Regenerative Schmelzwanne nach einem der Ansprüche 1 bis 4, dadurch gekennzeichnet, daß die Brennstoffzuführungsdüsen (1) unabhängig voneinander einzeln regelbar sind.

6. Regenerative Schmelzwanne nach einem der Ansprüche 1 bis 4, dadurch gekennzeichnet, daß die Brennstoffzuführungsdüsen (1) in Gruppen regelbar sind.

7. Regenerative Schmelzwanne nach einem der Ansprüche 1 bis 6, dadurch gekennzeichnet, daß eine Unterbankfeuerung vorhanden ist.

8. Verfahren zum Betreiben der Schmelzwanne nach einem der Ansprüche 1 bis 7, dadurch gekennzeichnet, daß den in der Decke (4) angeordneten Brennstoffzuführungsdüsen (1) zur Erzeugung einer längeren Flamme stärker Brennstoff zugeführt wird.

9. Verfahren zum Betreiben der Schmelzwanne nach einem der Ansprüche 1 bis 7, dadurch gekennzeichnet, daß den in dem Boden (3) angeordneten Brennstoffzuführungsdüsen (1) zur Bildung eines Flammenbandes im Gemengebereich stärker Brennstoff zugeführt wird.

10. Verfahren nach einem der Ansprüche 8 oder 9, dadurch gekennzeichnet, daß den in den rechten oder linken Seitenwänden (2) angeordneten Brennstoffzuführungsdüsen (1) zur Verschiebung des Flammenbandes in Strömungsrichtung nach rechts oder links stärker Brennstoff zugeführt wird.

## Claims

1. Regenerative melting tank with a burner neck comprising an arrangement of at least two fuel feed nozzles (1) supplying fuel to the burner each in the side walls (2), in the bottom (3), and in the ceiling (4) of the burner neck.

2. Regenerative melting tank according to claim 1, characterized in that the number of the fuel feed nozzles (1) in the side walls (2) is up to four.

3. Regenerative melting tank according to claim 1, characterized in that the number of the fuel feed nozzles (1) in the bottom (3) is three to seven.

4. Regenerative melting tank according to claim 1, characterized in that the number of the fuel feed nozzles (1) in the ceiling (4) is three to seven.

5. Regenerative melting tank according to one of the claims 1 to 4, characterized in that the fuel feed nozzles (1) are individually controllable independently from each other.

6. Regenerative melting tank according to one of the claims 1 to 4, characterized in that the fuel feed nozzles (1) are controllable in groups.

7. Regenerative melting tank according to one of the claims 1 to 6, characterized in that an underbank firing is provided.

8. Method for operating the melting tank according to one of the claims 1 to 7, characterized in that more fuel is supplied to the fuel feed nozzles (1) arranged in the ceiling (4) for generating a longer flame.

9. Method for operating the melting tank according to one of the claims 1 to 7, characterized in that more fuel is supplied to the fuel feed nozzles (1) arranged in the bottom (3) for forming a flame band in the glass batch area.

10. Method according to one of the claims 8 or 9, characterized in that more fuel is supplied to the fuel feed nozzles (1) arranged in the right or left side walls (2) for displacing the flame band towards the right or left side in flow direction.

## Revendications

1. Cuve de fusion à régénération et à col de brûleurs, comportant un agencement constitué à chaque fois d'au moins deux tuyères (1) d'amenée de combustible consuisant le combustible au brûleur, respectivement dans les parois latérales (2), dans le fond (3) et dans le plafond ou couvercle (4) du col de brûleurs.

2. Cuve de fusion à régénération selon la revendication 1, caractérisée en ce que le nombre de tuyères (1) d'amenée de combustible qui sont présentes dans les parois latérales (2) s'élèvent jusqu'à quatre.

3. Cuve de fusion à régénération selon la revendication 1, caractérisée en ce que le nombre des tuyères (1) d'amenée de carburant qui sont présentes dans le fond (3) est compris entre trois et sept.

4. Cuve de fusion à régénération selon la revendication 1, caractérisée en ce que le nombre de tuyères (1) d'amenée de combustible dans le plafond ou couvercle (4) est compris entre trois et sept.

5. Cuve de fusion à régénération selon l'une des revendications 1 à 4, caractérisée en ce que les tuyères (1) d'amenée de combustible sont réglables individuellement, indépendamment les unes des autres.

6. Cuve de fusion à régénération selon l'une des revendications 1 à 4, caractérisée en ce que les tuyères (1) d'amenée de combustible sont réglables en groupes.

7. Cuve de fusion à régénération selon l'une des revendications 1 à 6, caractérisée en ce qu'elle comporte un foyer de réchauffement par le dessous.

8. Procédé pour faire fonctionner la cuve de fusion selon l'une des revendications 1 à 7, caractérisée en ce que les tuyères (1) d'amenée de combustible disposées dans le plafond ou couvercle (4), sont alimentées plus fortement en combustible pour créer une flamme plus longue.

9. Procédé pour faire fonctionner la cuve de fusion selon l'une des revendications 1 à 7, caractérisé en ce que les tuyères (1) d'amenée de combustible disposées dans le fond (3) sont alimentées plus fortement en combustible dans la zone de mélange, pour créer une bande de flamme.

10. Procédé selon l'une des revendications 8 ou 9, caractérisé en ce que les tuyères (1) d'amenée de combustible disposées dans les parois latérales (2) de droite ou de gauche, sont alimentées plus fortement en combustible à droite ou à gauche pour décaler la bande de flamme dans la direction d'écoulement.
